# EUROPÄISCHE PATENTSCHRIFT

(11) **EP 1 199 233 B1**
(45) Veröffentlichungstag und Bekanntmachung des Hinweises auf die Patenterteilung: **08.03.2006**
(21) Anmeldenummer: 01122076.1
(22) Anmeldetag: 14.09.2001
(51) Int. Cl.: B60T 1/00

(54) **Steuereinrichtung für die Parksperre eines Kraftfahrzeugs**
Control device for a park-lock mechanism for motor vehicle
Dispositif de commande pour un frein de stationnement pour véhicule automobile

(30) Priorität: 19.10.2000 DE 10052261
(43) Veröffentlichungstag der Anmeldung: 24.04.2002
(73) Patentinhaber: DEERE & COMPANY, Moline, Illinois 61265-8098 (US)
(72) Erfinder: Falck, Peter, Waterloo, IA 50702 (US); Kilworth, Timothy, Waverly, IA 50677 (US); Kugler, Uwe, Cedar Falls, IA 50613 (US); Hoess, Bruno, Dr., 77833 Otterweier (DE); Schäfer, Helmut, 68775 Ketsch (DE); Tarasinski, Nicolai, Dr., 67227 Frankenthal/Pfalz (DE)
(74) Vertreter: Lau-Loskill, Philipp

(56) Entgegenhaltungen:
- WO-A-99/61296
- DE-A- 4 322 523
- US-A- 4 635 767
- US-A- 5 203 616

## Beschreibung

Die Erfindung betrifft eine Steuereinrichtung für die Parksperre eines Kraftfahrzeugs, mit wenigstens einem durch Ansteuermittel betätigbaren Stellantrieb, durch den sich wenigstens eine Verriegelungseinrichtung der Parksperre aus einer eingerückten Position, in die sie durch eine Haltekraft gedrängt wird, in eine ausgerückte Position bringen lässt.

Bei heutigen Fahrzeuggetrieben (synchronisierte, lastschaltbare oder automatische Getriebe) wird die Parksperre üblicherweise manuell über mechanisches Gestänge eingelegt, um die Drehbewegung von Getriebe- oder Fahrzeugrädern formschlüssig zu blockieren. Im Zuge von Komfortverbesserung werden Getriebe mit elektrisch betätigter Gangschaltung ausgeführt, so dass der Gangschaltbefehl vom Fahrer per Knopfdruck erfolgt. In diese Servobetätigung sollte sinnvollerweise auch die Parksperre mit einbezogen werden. Bei Verwendung stufenloser Getriebe, die einen kraftschlüssigen Stillstand durch Einstellung einer unendlich großen Übersetzung realisieren können, sollte die Parksperrenbetätigung automatisiert werden, damit der Übergang von kraftschlüssigem Stillstand in die Parkstellung (und umgekehrt) ohne Unterbrechung der Bremswirkung des Fahrzeuges erfolgt. Es wird somit angestrebt, die Betätigung einer Parksperre (einer mechanischen, formschlüssigen Verriegelung eines abtriebseitigen Zahnrades) so zu gestalten, dass das Verriegeln und Entriegeln der Parksperre durch eine elektrische Befehlsübertragung erfolgt.

Da von der Parksperrenfunktion ganz wesentlich die Betriebssicherheit des Fahrzeuges abhängt, sollte die Konstruktion und Auslegung betriebssicher, bzw. redundant sein. Dies betrifft vor allem das zuverlässige Ausführen des Fahrerwunsches nach Ver- oder Entriegelung, das Verhindern von unbeabsichtigter Verriegelung bei Fahrt und eine unbeabsichtigte Entriegelung im Stillstand (beispielsweise durch Ausfall der Hilfsenergie, Kurzschluss im Stromkreis und dergleichen).

Steuereinrichtungen für eine Parksperre eines Kraftfahrzeugs der eingangs genannten Art sind beispielsweise aus den US 4,635,767 und US 5,203,616 bekannt.

Das Gattungsbildende Dokument US 4 635 767 offenbart eine Steuereinrichtung für eine Parksperre nach dem Oberbegriff des ersten Anspruchs.

Die der Erfindung zugrunde liegende Aufgabe wird darin gesehen, eine Steuereinrichtung für die Parksperre der eingangs genannten Art anzugeben, durch welches die vorgenannten Forderungen erfüllt werden. Insbesondere soll die Steuereinrichtung einen sicheren, zuverlässigen Betrieb der Parksperre ermöglichen. Sie soll auf einfache kostengünstige Weise herstellbar sein und sich derart ausbilden lassen, dass sie sich bei vorhandenen Getrieben ohne nennenswerte Schwierigkeiten nachrüsten lässt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß sind bei der eingangs genannten Steuereinrichtung wenigstens zwei unabhängige auf den Stellantrieb einwirkende Ansteuermittel vorgesehen, die derart mit dem Stellantrieb zusammenwirken, dass eine Bewegung der Verriegelungseinrichtung aus der eingerückten Position in die ausgerückte Position oder umgekehrt aus der ausgerückten Position in die eingerückte Position nur dann erfolgt, wenn die beiden Ansteuermittel mit gleichsinnigen Umschaltsignalen angesteuert werden.

Dies lässt sich auf unterschiedliche Weise realisieren. Beispielsweise kann der Stellantrieb ein magnetischer Tauchanker sein, der die Verriegelungseinrichtung einrückt, wenn er stromlos ist, und ausrückt, wenn er von elektrischem Strom durchflossen ist. Bei den Ansteuermitteln kann es sich um im Strompfad des Tauchankers liegende elektrische Schalter handeln, die von einer elektrischen Steuereinheit durch elektrische Schaltsignale betätigt werden.

Eine bevorzugte Ausgestaltung der Erfindung sieht eine elektrohydraulisch betätigte Steuereinheit vor. Dabei ist der Stellantrieb vorzugsweise ein federvorgespannter hydraulischer Betätigungskolben, der bei Druckbeaufschlagung die Parksperre in ihre ausgerückte Position bringt. Die Ansteuermittel sind zweckmäßiger Weise als elektrisch ansteuerbare Hydraulikventile ausgebildet, die durch elektrische Signale aus einer Ruhestellung gegen die Kraft einer Feder in eine aktive Stellung überführbar sind. Insbesondere kommen 3/2-Wege-Magnetventile in Betracht.

Wirkungsvolle und einfache Ausgestaltungen der Erfindung lassen sich entsprechend den Merkmalen der Ansprüche 4 bis 6 ausbilden. Hierbei setzen die Hydraulikventile elektrische Befehle in hydraulische Befehle um. Sie sind insbesondere in Verbindung mit den Rückschlagventilen derart geschaltet, dass eine Zustandsänderung der Parksperre (Entriegelung oder Verriegelung) nur dann erfolgt, wenn beide Hydraulikventile gleichsinnig schalten. Sind beide Hydraulikventile im stromlosen Zustand, dann ist der Stellantrieb, insbesondere der Betätigungskolben, mit dem drucklosen Vorratsbehälter verbunden und der Zufluss von der Druckquelle zum Stellantrieb gesperrt, so dass sich der Stellantrieb, und mit ihm die Parksperre, in eingerückter, verriegelter Position befinden. Liegt an beiden Hydraulikventilen Spannung an, werden ihre Magnetschieber gegen die Wirkung ihrer jeweiligen Rückstellfeder in die Position verschoben, in der der Stellantrieb mit der Druckquelle verbunden und vom Vorratsbehälter getrennt ist. Unter der Wirkung des Systemdrucks der Druckquelle geht der Stellantrieb gegen die Wirkung einer die Haltekraft hervorrufenden Parksperrenfeder in die ausgerückte, entriegelte Position über.

Die in den Ansprüchen 5 und 6 genannten Rückschlagventile sind gegensinnig geschaltet und werden vorzugsweise durch Rückstellfedern in ihrer geschlossenen Position gehalten. Durch einen hinreichend hohen Hydraulikdruck lassen sich die Rückschlagventile gegen die Federkraft öffnen.

Unabhängig davon, in welchem Zustand (eingerückt oder ausgerückt) sich die Parksperre befindet, bleibt dieser Zustand erhalten, wenn lediglich ein Hydraulikventil umgeschaltet wird.

Solch eine Umschaltung kann beispielsweise durch ein unbeabsichtigtes elektrisches Signal ausgelöst werden (z. B. durch elektrischen Kurzschluss gegenüber Masse oder gegenüber einer 12V-Spannungsversorgung).

Im Zulauf des Druckzuflusses zu den Hydraulikventilen befindet sich zweckmäßiger Weise ein federbelastetes Eingangsrückschlagventil, das bei Systemdruckverlust, der beispielsweise unerwartet während der Fahrt auftritt, den Rückfluss zur Druckquelle absperrt und damit den Druck am Stellantrieb aufrechterhalten kann. Hierdurch wird ein schlagartiges Einlegen der Parksperre während der Fahrt durch Druckverlust im System (Pumpenschaden, Leckage im System etc.) verhindert. Die Auslegung kann beispielsweise derart erfolgen, dass der Druck im Stellantrieb ca. 10 Minuten aufrechterhalten werden kann, so dass dem Fahrzeugbenutzer nach Auftreten einer Warnmeldung genügend Zeit verbleibt, das Fahrzeug kontrolliert zum Stillstand zu bringen.

Die beiden Hydraulikventile werden vorzugsweise als kostengünstige Schieberventile ausgeführt, die normalerweise abhängig von Hydraulikflüssigkeitstemperatur und Druckdifferenz eine gewisse Leckage aufweisen. Wenn während der Fahrt - also bei ausgerückter Parksperre - beispielsweise das erste Hydraulikventil durch Kabelbruch oder dergleichen seine Stromversorgung verliert und zurückschaltet, könnte über innere Leckagen des zweiten Hydraulikventils der Kolbenraum des Betätigungskolbens langsam zum Vorratsbehälter hin entleert werden. Insbesondere um dies zu verhindern, sieht eine bevorzugte Weiterbildung der Erfindung vor, dass der Kolbenraum des Betätigungskolbens über eine weitere Ventilanordnung mit der Druckquelle in Verbindung steht.

Zweckmäßiger Weise sind in einer den Kolbenraum mit der Druckquelle verbindenden Verbindungsleitung ein Druckhalterückschlagventil, das einen Rückstrom von dem Kolbenraum zur Druckquelle verhindert, und eine Drosselstelle in Serie angeordnet. Damit kann der Kolbenraum des Betätigungskolbens bei vollständig entriegelter Parksperre, wenn also der Kolbenraum unter Druck steht, der Betätigungskolben in die ausgerückte Position gefahren ist und das Leckagekompensationsventil geöffnet ist, auch direkt von der Druckquelle über das Druckhalterückschlagventil und die Drosselstelle gespeist werden, so dass der Druck auch bei Leckagen aufrechterhalten wird. Das Druckhalterückschlagventil verhindert, dass bei Systemdruckabfall während der Fahrt, der Kolbenraum über die Verbindungsleitung durch einen Rückstrom (infolge Leckagen des ersten Hydraulikventils) zum Vorratsbehälter hin entleert werden kann. Für den Fall, dass der Betätigungskolben in seine eingerückte Stellung gebracht werden soll, indem die Hydraulikventile den Kolbenraum mit dem Vorratsbehälter verbinden, begrenzt die Drosselstelle den Zustrom zum Kolbenraum und ermöglicht so einen ausreichenden Flüssigkeitsabfluss über die Hydraulikventile, so dass der Betätigungskolben seine eingerückte Stellung einnehmen kann und in dieser Stellung verbleibt.

Es ist von besonderem Vorteil in der den Kolbenraum mit der Druckquelle verbindenden Verbindungsleitung ein steuerbares Leckagekompensationsventil anzuordnen, durch das sich ein Flüssigkeitsstrom von der Druckquelle zum Kolbenraum steuern lässt. Vorzugsweise ist das Leckagekompensationsventil ein durch eine Rückstellfeder in Schließstellung gedrängtes Rückschlagventil. Es ist zweckmäßig, das Leckagekompensationsventil über ein mechanisches Verbindungsglied mit dem Betätigungskolben derart zu koppeln, dass es immer dann geöffnet wird, wenn der Betätigungskolben seine ausgerückte Stellung einnimmt. Befindet sich der Betätigungskolben in der drucklosen eingerückten Stellung, dann wird das Leckagekompensationsventil nicht durch das mechanische Verbindungsglied geöffnet, sondern wird infolge des Systemdrucks bzw. der Federbelastung geschlossen. Ein unbeabsichtigtes Ausrücken der Parksperre durch direkte Flüssigkeitszufuhr von der Druckquelle ist somit in dieser Kolbenstellung ausgeschlossen.

Von besonderem Vorteil ist es, den Kolbenraum des Betätigungskolbens über ein Ablassventil, das drucklos durch Federkraft geöffnet ist, mit dem Vorratsbehälter zu verbinden. Wenn die Parksperre eingelegt, der Betätigungskolben also drucklos ist, kann über dieses Ablassventil eine gewisse Leckflüssigkeitsmenge abgeführt werden. Dies ist dann von Bedeutung, wenn bei fehlerhafter Bestromung des ersten Hydraulikventils (z. B. Kurzschluss an 12 V) die reguläre Verbindung zwischen dem Betätigungskolben und dem Vorratsbehälter über die Hydraulikventile verschlossen ist. Dann könnte sich nämlich durch eine Leckflüssigkeitsmenge ein Staudruck im Kolbenraum des Hydraulikzylinders aufbauen, der zum unerwünschten Ausrücken der Parksperre in diesem Fehlerfall (Strom an dem ersten Hydraulikventil) führen würde. Beim regulären Ausrücken der Parksperre wird das Ablassventil durch die Strömungskraft des über die Hydraulikventile freigegebenen Flüssigkeitsstroms sofort geschlossen. Der Öffnungsdruck des Ablassventils wird zweckmäßigerweise größer gewählt als der Öffnungsdruck des Rückschlagventils in der zweiten Verbindungsleitung, damit nach dem Abschalten der beiden Hydraulikventile, wenn also der Druck im Kolbenraum abfällt, das Ablassventil auch tatsächlich öffnet und nicht durch den geringen Restdruck im Kolbenraum entsprechend der Federkaft des genannten Rückschlagventils (z. B. 0,2 bar) verschlossen gehalten wird.

Vorzugsweise weist die Verriegelungseinrichtung eine im Getriebegehäuse gelagerte Sperrklinke auf, die mit einem drehfest mit der Fahrzeugachse verbundenen Zahnrad in Eingriff gebracht werden kann. Die Sperrklinke steht über mechanische Verbindungselemente mit dem Stellantrieb in Verbindung. Die Verzahnungsgeometrie wird dabei vorzugsweise abweisend gestaltet, so dass auch unter Maximalbelastungen die Sperrklinke sicher aus dem Eingriff geht, wenn die Betätigung zurückgestellt wird.

Für den Fall, dass das Fahrzeug bei Ausfall der Bordelektrik bzw. der Bordhydraulik abgeschleppt werden soll, muss die Parksperre gelöst werden. Zu diesem Zweck sieht eine bevorzugte Weiterbildung der Erfindung vor, funktionell parallel zu den beschriebenen Komponenten der Steuereinrichtung, insbesondere der elektro-hydraulischen Betätigung, eine mechanische Notbetätigungseinrichtung zum Ausrücken und Wiedereinrücken der Parksperre anzuordnen. Bei Betätigung der mechanischen Notbetätigungseinrichtung wird die Verriegelungseinrichtung der Parksperre gegen die Haltekraft einer Parksperrenfeder ausgerückt und in dieser Position festgesetzt.

Es ist hierbei von besonderem Vorteil, die Verriegelungseinrichtung wahlweise mit einem Kupplungspedal derart zu koppeln, dass durch Betätigung des Kupplungspedals die Verriegelungseinrichtung ihre ausgerückte Position einnimmt. Die Kopplung kann über lösbare Verbindungselemente erfolgen.

Des weiteren ist die mechanische Notbetätigungseinrichtung vorzugsweise so beschaffen, dass die normalen Bewegungen der mechanischen Parksperrenbetätigung zu keiner Bewegung der mechanischen Notbetätigungseinrichtung führen. Dies kann über entsprechende Lose oder Freilauffunktionen sichergestellt werden.

Gemäß einer bevorzugten Weiterbildung der Erfindung ist wenigstens eine elektrische Steuereinheit vorgesehen, die elektrische Steuersignale zum Einrücken (kein Strom) oder Ausrücken (Strom) der Parksperre an die Hydraulikventile abgibt. Es handelt sich hierbei zweckmäßiger Weise um einen Getriebe-Controller, der auch die erfindungsgemäßen Funktionen ausführt. Der Befehl zum Einrücken und Ausrücken wird vorzugsweise entweder direkt vom Fahrzeugbenutzer ausgelöst oder kommt von einem Geber des Bedienungshebels oder von einem anderen Messgeber, beispielsweise einem Drehzahlsensor oder einem Messgeber der insbesondere sicherheitsrelevante Messgrößen erfasst, die von der Steuereinheit ausgewertet werden.

Es ist auch von Vorteil, einen Geber, insbesondere einen Drucksensor vorzusehen, der direkt oder indirekt die Lage der Verriegelungseinrichtung erfasst und an die Steuereinheit meldet, so dass jederzeit eine Rückmeldung über die tatsächliche Parksperrenposition vorliegt.

Eine vorteilhafte Ausgestaltung der Erfindung sieht eine Haupt- oder Getriebesteuereinheit und eine Neben- oder Parksperrensteuereinheit vor, die unabhängig voneinander mit Spannung versorgt werden und miteinander kommunizieren. Der Befehl zum Ein- oder Ausrücken der Parksperre wird von der Hauptsteuereinheit einerseits direkt zum ersten Hydraulikventil geleitet und andererseits über die Nebensteuereinheit (Backup Controller) zum zweiten Hydraulikventil geleitet. Beide Steuereinheiten empfangen vorzugsweise unabhängig voneinander Drehzahlsignale vom Fahrzeugantrieb.

Diese Anordnung bietet Redundanz. Durch sie kann verhindert werden, dass eine defekte Steuereinheit oder ein defekter Sensor zu einem unbeabsichtigten Einlegen der Parksperre oberhalb einer vorgegebenen Fahrgeschwindigkeit oder einem unbeabsichtigten Ausrücken im Stillstand bei laufendem Verbrennungsmotor (Versorgungsdruck!) führt. Durch die direkte Spannungsversorgung der Nebensteuereinheit (gesonderter Anschluss an die Fahrzeugbatterie) wird gewährleistet, dass ein Abstellen der Zündung während der Fahrt nicht zum automatischen Einlegen der Parksperre führt. Durch eine Zuleitung vom Zündschloss des Fahrzeugs zur Nebensteuereinheit kann ein Wecksignal erzeugt werden. Die beiden Steuereinheiten sind über Kommunikationsleitungen miteinander verbunden, die der gegenseitigen Überwachung dienen.

Vorzugsweise ist wenigstens ein Sensor oder Schaltelement zur Erfassung der Stellung einer Notbetätigungseinrichtung, beispielsweise eines Kupplungspedals vorgesehen, dessen Signale von der Steuereinheit erfasst und ausgewertet werden.

Das erfindungsgemäße Konzept verwendet vorhandene Bauteile der getriebeinternen mechanischen Parksperre (Zahnrad, Klinke, Nockenwelle) und ist von außen als elektro-hydraulische Betätigungseinheit anbaubar, so dass eine automatisierte Bedienung an einem vorhandenen Getriebe nachgerüstet werden kann. Die Bedienbarkeit über Hilfsenergie ist eine wesentliche Komfortverbesserung und ermöglicht es auch die Parksperrenfunktion in moderne Bedienelemente (Joystick, Armrestcontrols etc.) zu integrieren. Das Konzept ist betriebssicher bei Ausfall der Hilfsenergie Druck und bei verschiedenen Unterbrechungen/Kurzschlüssen im Stromkreis und bei Fehlbedienung (Einlegen der Parksperre oder Ausschalten der Zündung bei Fahrt). Auch bei fehlerhafter Bestromung eines der beiden Magnetventile bleibt der gewählte Betriebszustand (in diesem Falle Park) sicher erhalten. Der hydraulische Kreis ist mit einfachen, handelsüblichen und zuverlässigen Komponenten aufgebaut.

Durch die elektronische Steuerung der Parksperrenbetätigung können über die Ausführung des Fahrerbefehls hinaus weitere - vor allem sicherheitstechnische - Funktionen realisiert werden wie z.B.:
- automatisches Einlegen der Parksperre im Stillstand, wenn der Motor abgestellt wird oder wenn bei stufenlosen Getrieben der Zustand "kraftschlüssiger Stillstand" eine vorbestimmte Zeitspanne überschreitet,
- Verhindern des Parksperreneinlegens bei Fahrgeschwindigkeiten oberhalb eines vorbestimmten Wertes (z.B. 1 km/h), selbst wenn dies vom Fahrer befohlen wird,
- automatisches Einlegen der Parksperre bei Getriebedefekten, wenn das Fahrzeug zum Stillstand gekommen ist,
- ständige Plausibilitätsabfrage und Ausgabe von Fehlermeldungen.

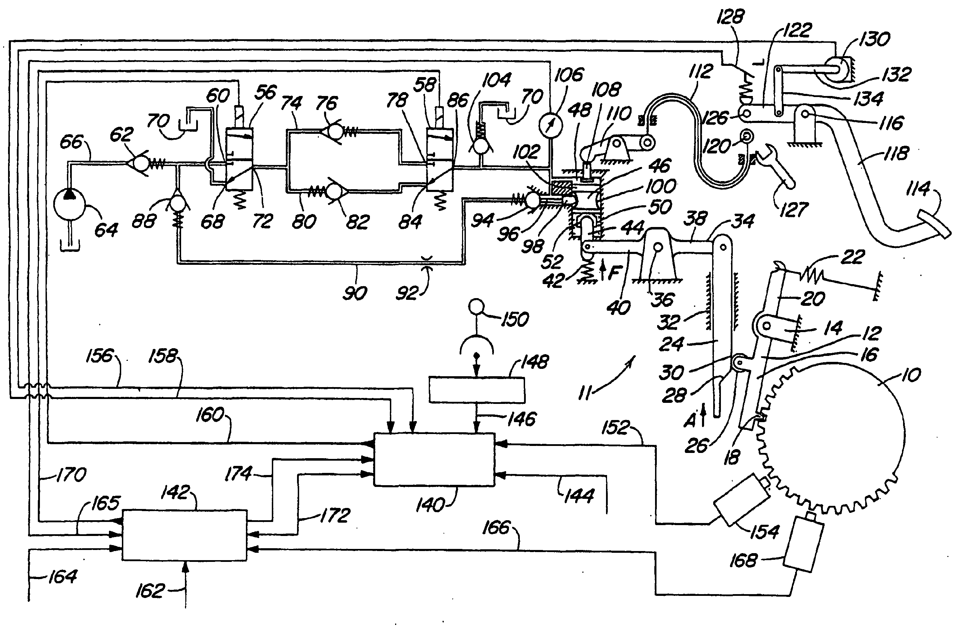

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert. In der einzigen Figur ist das Funktionsschema einer erfindungsgemäßen Steuereinrichtung mit hydraulischen und elektrischen Steuerkreisen schematisch dargestellt.

Die dargestellte Steuereinrichtung kann bei einer Parksperre eines Ackerschleppers Anwendung finden. Es ist ein Ausgangszahnrad 10 des Fahrzeuggetriebes erkennbar, das drehfest mit den nicht dargestellten angetriebenen Achsen und Rädern des Ackerschleppers verbunden ist.

Es ist eine mechanische Verriegelungsvorrichtung 11 vorgesehen, die eine wippenförmig ausgebildete Sperrklinke 12 enthält, welche mittels einer Halterung 14 verschwenkbar am nicht gezeigten Getriebegehäuse oder Fahrzeugchassis gelagert ist. Ein erster Arm 16 der Sperrklinke 12 trägt eine Verzahnung 18. Durch Verschwenken der Sperrklinke 12 lässt sich die Verzahnung 18 der Sperrklinke 12 mit der Verzahnung des Ausgangszahnrades 10 in Eingriff bringen, so dass Formschluss hergestellt und eine Drehung des Ausgangszahnrades 10 und damit eine Bewegung des Fahrzeugs verhindert wird. Die Verzahnungsgeometrie ist abweisend gestaltet, so dass auch unter Maximalbelastungen (Fahrzeuggewicht, Hangneigung, Traktionsbeiwert etc.) die Sperrklinke 12 sicher aus ihrem Eingriff mit dem Ausgangszahnrad 10 lösbar ist. Am zweiten Arm 20 der Sperrklinke 12 greift eine Rückstellfeder 22 an, die ein sicheres Rückstellen der Sperrklinke 12 in ihre Ruhestellung, in der ihre Verzahnung 18 nicht in die Verzahnung des Ausgangszahnrades 10 eingreift, bewirkt, sofern auf die Sperrklinke 12 keine weitere mechanische Kraft ausgeübt wird.

Die Verriegelungseinrichtung 11 kann des weiteren eine federvorgespannte Betätigungswelle enthalten, deren Stirnseite Betätigungsnocken aufweist. Beim Verdrehen der Betätigungswelle tritt der Betätigungsnocken über eine reibungsmindernde Rolle mit einer Sperrklinke 12 in Eingriff, und bewirkt ein Verschwenken der Sperrklinke 12. Eine derartige Ausbildung ist bekannt und wird beispielsweise bei den John Deere Ackerschleppern der Serie 6610 verwendet. Zum besseren Verständnis ist in der Zeichnung an Stelle der Betätigungswelle ein verschiebbarer Riegel 24 dargestellt. Der Riegel 24 weist an einer Seite eine schräge Rampe (Nocken) auf, die über eine am ersten Arm 16 der Sperrklinke 12 angebrachte reibungsmindernde Rolle 26 ein Verschwenken der Sperrklinke 12 bewirkt. Die Rampe umfasst einen Bereich 28 mit steilerem Winkel, der im Schwenkbereich der Sperrklinke 12 liegt, und einen Bereich 30 mit flachem Winkel, der im Eingriffsbereich (Parkstellung) der Sperrklinke 12 liegt und die Rückwirkung von hohen fahrzeugseitigen Lasten auf die Betätigung minimiert. Durch Verschiebung des Riegels 24 in Pfeilrichtung A wird die Sperrklinke 12 in ihre ausgerückte Stellung, und durch Zurückschieben gegen die Pfeilrichtung A in ihre eingerückte Parkposition, in der der Bereich 30 mit flacherem Winkel mit der Rolle 26 in Eingriff steht (wie dargestellt), verstellt.

Der in einer Führung 32 geführte Riegel 24 ist an einem ersten Arm 34 eines um eine ortsfeste Drehachse 36 verschwenkbaren Balkens 38 gelenkig angeordnet. An dem zweiten Arm 40 des Balkens 38 greift eine Hauptfeder 42 an, die eine Kraft in Pfeilrichtung F ausübt und den Riegel 24 gegen die Pfeilrichtung A in die dargestellte eingerückte Stellung drängt. Im Gegensatz zu bisherigen manuellen Betätigungen nimmt die Verriegelungseinrichtung 11 bei fehlender weiterer Krafteinwirkung ihre verriegelte (eingerückte) Position (Default-Stellung) ein. Dies gewährleistet bei Ausfall der Hilfsenergie einen sicheren Fahrzeugzustand.

Am zweiten Arm 40 des Balkens 38 greift des weiteren der Betätigungsschaft 44 eines hydraulischen Betätigungskolbens 46 gelenkig an. Der Kolben 46 wird von einer Gehäusebohrung verschiebbar aufgenommen und begrenzt an seiner dem Betätigungsschaft 44 abgewandten Stirnseite einen Kolbenraum 48. Eine Druckfeder 50 drängt den Kolben 46 in Richtung Kolbenraum 48. Der Betätigungsschaft 44 ist am Kolben 46 nicht starr befestigt. Vielmehr ist zwischen beiden Bauteilen eine Gleitverbindung 52 vorgesehen, die eine Druckkraftübertragung ermöglicht jedoch keine Zugkraftübertragung zulässt.

Wird der Kolbenraum 48 unter Druck gesetzt, so verschiebt sich der Kolben 46 gegen die Kraft der Druckfeder 50 nach unten und drückt über den Betätigungsschaft 44 auf den Balken 38, welcher gegen die Kraft der Hauptfeder 42 verschwenkt wird und den Riegel 24 nach oben verschiebt. Damit geht die Rolle 26 aus dem Bereich 30 mit flachem Winkel in den Bereich 28 mit steilerem Winkel über und gibt die Sperrklinke 12 frei, welche durch die Kraft der Rückstellfeder 22 in ihre ausgerückte Position geschwenkt wird.

Wird die im Kolbenraum 48 herrschende Druckkraft infolge eines Einrücksignals abgeschaltet, so reagiert der Kolben 46 unmittelbar. Er wird durch die Druckfeder 50 nach oben geschoben und drückt das Flüssigkeitsvolumen aus dem Kolbenraum 48. Wegen der Gleitverbindung 52 zwischen Kolben 46 und Betätigungsschaft 44 verschiebt sich der Kolben 46 unabhängig davon, ob die mechanischen Bauteile der Verriegelungseinrichtung 11 der Kolbenverschiebung folgen.

Die Ausbildung der genannten Gleitverbindung 52 wirkt sich dann besonders vorteilhaft aus, wenn zum Zeitpunkt eines Einrücksignals die Verzahnung der Sperrklinke 18 auf der Verzahnung des Ausgangszahnrades 10 aufsteht (Zahn auf Zahn), so dass ein Ineinandergreifen der Verzahnungen zunächst noch nicht möglich ist. Die Bauteile der Verriegelungseinrichtung 11, insbesondere der Balken 38 und der Betätigungsschaft 44 können dann nicht ihre eingerückte Position einnehmen. Unabhängig hiervon wird jedoch der Kolben 46 durch die Kraft der Druckfeder 50 nach oben geschoben und entleert, den Kolbenraum 48, was infolge von Durchflusswiderständen der den Kolbenraum 48 ansteuernden hydraulischen Bauteile (abhängig von der Ölviskosität) eine kleine Zeitspanne beanspruchen kann. Erfolgt dann durch Verdrehen des Ausgangszahnrades 10 der Zahneingriff, können die Bauteile der Verriegelungseinrichtung 11 ohne Zeitverlust, schlagartig nachrücken, ohne dass die Einrückbewegung durch hydraulische Durchflusswiderstände und dergleichen gedämpft wird. Ein schneller Zahneingriff ist wünschenswert, um zu verhindern, dass das Ausgangszahnrad 10 bei starker Beschleunigung eine hohe Drehgeschwindigkeit erreicht, so dass durch hohe Relativbewegungen der Verzahnungen ein Zahneingriff erschwert wird oder nicht mehr möglich ist.

Die Steuerung des Druckmittelflusses zum und vom Kolbenraum 48 erfolgt durch zwei 3/2-Wege-Magnetventile 56, 58, die elektrische Befehle in hydraulische Befehle umsetzen. Der erste Eingang 60 des ersten Magnetventils 56 steht unter Zwischenschaltung eines federbelasteten Eingangsrückschlagventils 62 mit einer durch eine Druckquelle 64 gespeisten Druckversorgungsleitung 66 in Verbindung. Das Eingangsrückschlagventil 62 verhindert einen Druckmittelrückfluss von dem ersten Magnetventil 56 zu der Druckversorgungsleitung 66. Es öffnet, wenn der Druck in der Druckversorgungsleitung 66 eine Gegenkraft überwindet, die durch eine Feder des Eingangsrückschlagventils 62 erzeugt wird. Bei der Druckquelle 64 handelt es sich beispielsweise um eine Hydraulikpumpe und übliche Mittel zur Druckregulierung, die insbesondere auch andere Verbraucher des Ackerschleppers versorgen, was jedoch nicht dargestellt wurde.

Ein zweiter Eingang 68 des ersten Magnetventils 56 steht unmittelbar mit einem Vorratsbehälter 70 oder Sumpf in Verbindung. Der Ausgang 72 des ersten Magnetventils 56 ist bei anliegender elektrischer Spannung mit dem ersten Eingang 60 und im stromlosen Zustand (wie dargestellt) mit dem zweiten Eingang 68 verbunden.

Der Ausgang 72 des ersten Magnetventils 56 steht über eine erste Verbindungsleitung 74, in der ein erstes Rückschlagventil 76 angeordnet ist, mit einem ersten Eingang 78 des zweiten Magnetventils 58 und über eine zweite Verbindungsleitung 80, in der ein zweites Rückschlagventil 82 angeordnet ist, mit einem zweiten Eingang 84 des zweiten Magnetventils 58 in Verbindung. Das erste Rückschlagventil 76 ist federbelastet und so angeordnet, dass es einen Rückstrom vom zweiten Magnetventil 58 zum ersten Magnetventil 56 verhindert. Das zweite Rückschlagventil 82 ist federbelastet und so angeordnet, dass es einen Zustrom vom ersten Magnetventil 56 zum zweiten Magnetventil 58 verhindert.

Der Ausgang des zweiten Magnetventils ist bei anliegender elektrischer Spannung am zweiten Magnetventil 58 mit dem ersten Eingang 78 und im stromlosen Zustand des zweiten Magnetventils 58 mit dem zweiten Eingang 84 (wie dargestellt) verbunden. Der Ausgang 86 des zweiten Magnetventils 58 steht mit dem Kolbenraum 48 in Verbindung.

Der Kolbenraum 48 steht auch über eine weitere Ventilanordnung mit der Druckversorgungsleitung 66 in Verbindung, und zwar über das Eingangsrückschlagventil 62, ein Druckhalterückschlagventil 88, eine Verbindungsleitung 90, in der eine die Durchflussmenge begrenzende Drosselstelle 92 angeordnet ist, und ein Leckagekompensationsventil 94. Das Druckhalterückschlagventil 88 ist federbelastet und verhindert einen Flüssigkeitsrückfluss von dem Kolbenraum 48 zur Druckversorgungsleitung 66. Das Leckagekompensationsventil 94 ist ein federbelastetes Rückschlagventil, das den Flüssigkeitszustrom zum Kolbenraum 48 normalerweise verhindert und das sich durch ein vom Kolben 46 beeinflusstes Verbindungsglied öffnen lässt. Das Verbindungsglied enthält einen Steuerstift 96, dessen Kopf 98 in eine Ringnut 100 des Kolbens 46 eingreift, sofern sich der Kolben 46 in seiner drucklosen Ruhestellung befindet (wie dargestellt). In dieser Lage des Steuerstiftes 96 ist das Leckagekompensationsventil 94 geschlossen. Wenn sich der Kolben 46 durch Druckerhöhung im Kolbenraum 48 nach unten bewegt, wird der Steuerstift 96 aus der Ringnut 100 gedrückt und gleitet auf den dem Kolbenraum 48 zugewandten Bund 102 des Kolbens 46. Dabei verschiebt sich der Steuerstift 96 und öffnet das Leckagekompensationsventil 94, wodurch eine Verbindung zwischen der Druckversorgungsleitung 66 und dem Kolbenraum 48 hergestellt wird. Der Druckmittelstrom wird jedoch durch die Drosselstelle 92 begrenzt und reicht lediglich aus, um Leckageverluste auszugleichen. Wird der Kolbenraum 48 über die Magnetventile 56, 58 mit dem drucklosen Vorratsbehälter 70 verbunden, so fällt der Druck im Kolbenraum 48 ab, der Kolben 46 verschiebt sich nach oben, der Steuerstift 96 gleitet in die Ringnut 100 und das Leckagekompensationsventil 94 schließt unter Wirkung seiner Federkraft, so dass der Kolbenraum 48 von der Druckversorgungsleitung 66 getrennt ist.

Der Kolbenraum 48 steht über ein Ablassventil 104 mit dem Vorratsbehälter 70 in Verbindung. Ist der Kolbenraum 48 drucklos, wird das Ablassventil 104, das nach Art eines Rückschlagventils ausgebildet ist, durch Federkraft geöffnet. Über das Ablassventil 104 kann daher eine gewisse Leckflüssigkeitsmenge abgeführt werden, wenn bei drucklosem Kolbenraum 48 die Parksperre eingerückt ist. Werden die beiden Magnetventile 56, 58 eingeschaltet, die Verbindung von der Druckversorgung 64 zum Kolbenraum 48 also hergestellt, so wird das Ablassventil 104 durch die Strömungskraft der abfließenden Flüssigkeit geschlossen, so dass dann der Druck im Kolbenraum 48 ansteigt und die Parksperre ausrückt.

Der Druck des Kolbenraums 48 wird durch einen Drucksensor 106 erfasst und in elektrische Signale umgewandelt. Das vom Drucksensor 106 ausgegebene Drucksignal gibt im wesentlichen die jeweilige Stellung des Kolbens 46 und damit auch die Stellung der Verriegelungsvorrichtung 11 wieder.

Es ist eine manuell betätigbare mechanische Notbetätigungseinrichtung für die Parksperre vorgesehen, durch die sich die Parksperre ausrücken lässt, wenn eine Störung vorliegt, beispielsweise bei einem Ausfall der elektrischen oder hydraulischen Versorgung. Eine Notbetätigung kann z. B. für das Abschleppen des Fahrzeugs erforderlich sein. Die Notbetätigungseinrichtung greift an dem Kolben 46 an und wird über Gestänge oder Bowdenzug in die Fahrerkabine geführt und kann dort über geeignete Hebel oder Pedale von der Bedienungsperson betätigt werden. Zum Abschleppen muss diese Bedienung kabinenseitig arretiert werden. Die mechanische Parksperre ist so beschaffen, dass die normalen Bewegungen der oben beschriebenen Parksperrenmechanik zu keiner Bewegung der Notbetätigungseinrichtung führen. Dies wird über entsprechende Lose oder Freilauffunktionen sichergestellt.

Die dargestellte Notbetätigungseinrichtung enthält einen Betätigungsbolzen 108, der auf die Stirnseite des Kolbens 46 wirkt und über einen Umlenkhebel 110 und Bowdenzug 112 betätigbar ist. Die Durchführung des Betätigungsbolzens 108 vom Kolbenraum 48 nach außen ist auf geeignete Weise gedichtet. Hubbewegungen des Kolbens 46 beim Einrücken und Ausrücken der Parksperre werden nicht auf den in Ruhestellung dargestellten Betätigungsbolzen übertragen.

Es ist ein Kupplungspedal 114 des Fahrzeugs dargestellt, welches an einem auf einer ortsfesten Drehachse 116 montierten Pedalhebel 118 befestigt ist. Das Kupplungspedal 114 lässt sich für eine Notbetätigung der Parksperre nutzen, indem das obere Ende 120 des Bowdenzugs 112 mit dem freien Ende 122 des Pedalhebels 118 verbunden wird. Hierzu wird beispielsweise eine Bohrung des Bowdenzugs 112 in einen vom freien Ende 122 des Pedalhebels 118 abstehenden Bolzen 126 eingehängt und gegebenenfalls gesichert. Zum Einhängen und Sichern kann ein symbolisch dargestelltes Werkzeug 127 verwendet werden.

Bei Betätigung des Kupplungspedals 114, wird das eingehängte Ende 120 des Bowdenzugs 112 nach oben gezogen. Dabei verschwenkt der Umlenkhebel 110 und drückt den Betätigungsbolzen 108 nach unten, so dass der Kolben 46 über den Balken 40 den Riegel 24 nach oben zieht, so dass die Rolle 26 der Sperrklinke 12 in den Bereich 28 mit steilerem Winkel gelangt und die Sperrklinke 12 durch die Rückstellfeder 22 aus ihrer eingerückten Stellung (dargestellt) in ihre ausgerückte Stellung bewegt wird. Bei Entlastung des Kupplungspedals 114 nimmt der Pedalhebel 118 seine dargestellte Ruhelage ein, in die er durch eine übliche Kupplungspedalrückstellfeder gedrängt wird. Mit der Kraft der Hauptfeder 42 schiebt der Balken 38 den Riegel 24 nach unten, so dass die Rolle 26 in den Bereich 30 mit flachem Winkel gelangt und die Sperrklinke 12 in ihre eingerückte Lage drückt.

Damit während eines Abschleppvorganges das Kupplungspedal 114 nicht ständig betätigt werden muss, lässt sich dieses durch geeignete Maßnahmen in der betätigten Stellung blockieren. Dies erfolgt beispielsweise durch einen nicht dargestellten Blockierbolzen, der den Pedalhebel 118 in Bezug auf das Fahrzeugchassis festsetzt.

Die Position des Pedalhebels 118 wird durch einen elektrischen Lagesensor 130 erfasst, der mit dem freien Ende 122 des Pedalhebels 118 in Verbindung steht und der ein der jeweiligen Position des Pedalhebels 118 entsprechendes analoges elektrisches Signal ausgibt. Es kann sich dabei um ein mit der Drehachse 116 verbundenes Drehpotentiometer handeln. Im dargestellten Ausführungsbeispiel ist als Lagesensor ein Drehpotentiometer 130 dargestellt, welches über einen Dreharm 132 und eine Lasche 134 mit dem freien Ende 122 des Pedalhebels 118 in Verbindung steht.

Aus Redundanzgründen ist ein Lageschalter 128 vorgesehen, der ebenfalls mit dem freien Ende 122 des Pedalhebels 118 in Verbindung steht. Wenn das Kupplungspedal 114 nicht betätigt wird und sich der Pedalhebel 118 in seiner Ruhestellung befindet, ist der Lageschalter 128 offen. Er schließt, sobald das Kupplungspedal 114 voll durchgetreten ist. Bei Verwendung des Kupplungspedals 114 zur Notbetätigung der Parksperre zeigt das Ausgangssignal des Lageschalters 128 (Schließstellung) somit an, ob die Parksperre aufgehoben wurde.

Insbesondere bei Fahrzeugen mit stufenlosem Antrieb wird die Position des Kupplungspedals häufig durch Lagesensoren oder Lageschalter von einer Getriebesteuerung überwacht, um das Getriebe automatisch auf Neutral zu schalten, sobald das Kupplungspedal 114 betätigt wird. Es ist vorteilhaft diese bereits vorhandenen Bauteile zur Notbetätigung zu verwenden. Die Verwendung des Kupplungspedals 118 zur Notbetätigung ist auch vorteilhaft, weil sich durch die Fußbetätigung hohe Kräfte auf die Verriegelungsvorrichtung 11 übertragen lassen, so dass sich die Kraft der Hauptfeder 42 mühelos überwinden lässt.

Zur Ansteuerung der beiden Magnetventile 56, 58 ist eine elektronische Haupt- oder Getriebesteuereinheit 140 und eine Neben- oder Parksperrensteuereinheit 142 vorgesehen. Die Hauptsteuereinheit 140 steht über die Leitung 144 mit dem nicht gezeigten Zündschlossschalter des Fahrzeugs sowie über die Leitung 146 mit einer Fahrzeugsteuerung 148 in Verbindung, die ihrerseits die Stellung eines Bedienhebels 150 detektiert. Die Hauptsteuerung 140 empfängt über die Leitung 152 Signale von einem ersten Drehzahlsensor 154, der die Drehzahl des Ausgangszahnrades 10 erfasst, sowie über die Leitungen 156 und 158 Signale von dem Lageschalter 128 und von dem Drehpotentiometer 130, welche die Stellung des Kupplungspedals 114 erfassen. Die Hauptsteuereinheit 140 steuert über die Leitung 160 das erste Magnetventil 56 an.

Die Nebensteuereinheit 142 steht über die Leitung 162 unmittelbar mit der nicht gezeigten Fahrzeugbatterie in Verbindung. Sie ist darüber hinaus über die Leitung 164 mit dem Zündschlossschalter verbunden. Die Nebensteuereinheit 142 empfängt über die Leitung 165 Signale von dem Drucksensor 106 sowie über die Leitung 166 Signale von einem zweiten Drehzahlsensor 168, der unabhängig vom ersten Drehzahlsensor 154 die Drehzahl des Ausgangszahnrades 10 erfasst. Die Nebensteuereinheit 142 steuert über die Leitung 170 das zweite Magnetventil 58 an. Die Hauptsteuereinheit 140 und die Nebensteuereinheit 142 tauschen über einen CAN-Bus 172 Daten miteinander aus. Aus Redundanzgründen teilt die Nebensteuereinheit 142 über eine Leitung 174 der Hauptsteuereinheit 140 die durch den zweiten Drehzahlsensor 168 ermittelte Drehzahl mit.

Die Hauptsteuereinheit 140 gibt Signale zum Einlegen (kein Strom) oder Ausrücken (Strom) der Parksperre an die Magnetventile 56, 58 ab. Der Befehl hierzu kommt entweder von der Bedienungsperson über den Bedienhebel 150, die Fahrzeugsteuerung 148 und die Leitung 146 oder ergibt sich aus sicherheitsrelevanten Messgrößen, die in der Hauptsteuereinheit 140 verarbeitet werden. Der Befehl zum Ein- oder Ausrücken der Parksperre wird von der Hauptsteuereinheit 140 direkt zum ersten Magnetventil 56 und indirekt über die Leitung 174 und die Nebensteuereinheit 142, die weitere Überprüfungen vornimmt, zum zweiten Magnetventil 58 geleitet.

Sind beide Magnetventile 56, 58 stromlos, so ergeben sich die in der Zeichnung dargestellten Ventilpositionen, bei denen der Kolbenraum 48 über das zweite Magnetventil 58, das zweite Rückschlagventil 82 und das erste Magnetventil 56 mit dem Vorratsbehälter 70 verbunden ist. Dabei befindet sich der Kolben 46 infolge der Kraft der Druckfeder 50 in seiner oberen Stellung und die Verriegelungseinrichtung 11 wird durch die Hauptfeder 42 in die dargestellte eingerückte Position gedrängt. Das Ablassventil 104 wird durch seine Feder geöffnet und erlaubt ebenfalls einen unmittelbaren Druckausgleich zwischen dem Kolbenraum 48 und dem Vorratsbehälter 70.

Wird bei stromlosem ersten Magnetventil 56 lediglich das zweite Magnetventil 58 mit Strom beaufschlagt, so schaltet letzteres um und verbindet seinen ersten Eingang 78 mit seinem Ausgang 86. Da das erste Magnetventil 56 jedoch den Zustrom von der Druckversorgung sperrt, die Leitungen 74 und 80 nach wie vor mit dem Vorratsbehälter verbunden sind und da weiterhin das Ablassventil 104 offen bleibt, ändert dies nichts an der Stellung des Kolbens 46.

Wird bei stromlosem zweiten Magnetventil 58 lediglich das erste Magnetventil 56 mit Strom beaufschlagt, so schaltet letzteres um und verbindet seinen ersten Eingang 60 mit seinem Ausgang 72. Zwar steht nun in der Verbindungsleitung 80 der Systemdruck an, das zweite Rückschlagventil 82 verhindert jedoch einen Flüssigkeitszufluss zur Kolbenkammer 48. Der Rückfluss vom Kolbenraum zum Vorratsbehälter über 86, 84, 82, 80, 72 ist in diesem Zustand gesperrt, am Eingang 78 des zweiten Magnetventils 58 steht jedoch Druck an, der über eine interne Leckage des Magnetventils 58 zu einem geringen Leckfluss in den Kolbenraum 48 führt. Diese geringe Leckmenge wird über das offene Ablassventil 104 zum Vorratsbehälter 70 abgeführt, so dass sich kein Druck im Kolbenraum 48 aufbauen kann, der zum unerwünschten Ausrücken der Parksperre führen würde. Es ändert sich also auch in diesem Fall nichts am eingerückten Zustand der Parksperre.

Werden jedoch beide Magnetventile 56, 58 mit Strom beaufschlagt und schalten aus der dargestellten stromlosen Stellung in ihre erregte Stellung um, so wird der Systemdruck der Druckversorgungsleitung 66 über das Eingangsrückschlagventil 62, das erste Magnetventil 56, das erste Rückschlagventil 76 und das zweite Magnetventil 58 dem Kolbenraum 48 zugeführt und verschiebt den Kolben 46 gegen die Kraft der Druckfeder 50 und der Hauptfeder 42 nach unten. Die Verriegelungsvorrichtung 11 bewegt sich hierbei aus ihrer eingerückten Stellung in ihre ausgerückte Stellung. Durch den anstehenden Flüssigkeitsstrom schließt das Ablassventil 104. Bei dieser Kolbenstellung wird der Steuerstift 96 durch den Bund 102 des Kolbens 46 aus der Ringnut 100 gedrückt und öffnet das Leckagekompensationsventil 94, so dass der Systemdruck auch über die Verbindungsleitung 90, in der das Druckhalterückschlagventil 88, die Drosselstelle 92 und das Leckagekompensationsventil 94 angeordnet sind, am Kolbenraum 48 ansteht.

Wird bei erregtem (mit Strom beaufschlagtem) zweiten Magnetventil 58 lediglich das erste Magnetventil 56 stromlos gemacht, so schaltet letzteres um und verbindet seinen zweiten Eingang 68 mit seinem Ausgang 72. Zwar ist der Ausgang 72 nun mit dem Vorratsbehälter 70 verbunden, das erste Rückschlagventil 76 verhindert jedoch einen Flüssigkeitsrückfluss aus der Kolbenkammer 48. Dieser steht über die Verbindungsleitung 90 weiterhin mit der Druckversorgungsleitung 66 in Verbindung. Es ändert sich am ausgerückten Zustand der Parksperre nichts.

Wird bei erregtem ersten Magnetventil 56 lediglich das zweite Magnetventil 58 stromlos gemacht, so schaltet letzteres um und verbindet seinen zweiten Eingang 84 mit seinem Ausgang 86. Wegen der Wirkung des zweiten Rückschlagventils 82 ist nun ein Flüssigkeitszufluss von der Druckversorgungsleitung 66 zum Kolbenraum 68 nicht mehr möglich. Jedoch steht die Kolbenkammer 48 weiterhin über die Verbindungsleitung 90 mit der Druckversorgungsleitung 66 in Verbindung. Es ändert sich am ausgerückten Zustand der Parksperre nichts.

Unabhängig von der Stellung der Magnetventile 56, 58 wird durch das Eingangsrückschlagventil 62 ein Flüssigkeitsabfluss vom Kolbenraum 48 in die Druckversorgungsleitung 62 verhindert, so dass sich ein im Kolbenraum 48 aufgebauter Druck nicht wegen eines unbeabsichtigten Druckabfalls in der Druckversorgungsleitung 62 abbaut. Das Druckhalterückschlagventil 88 verhindert einen Flüssigkeitsabfluss vom Kolbenraum 48 über interne Leckage des ersten Magnetventils 56 vom Eingang 60 zum Eingang 68 und damit zum Vorratsbehälter 70. Insbesondere bei Systemdruckausfall während der Fahrt kann eine Restleckage vom Kolbenraum 48 zum Vorratsbehälter 70 auftreten, und zwar über eine interne Leckage des zweiten Magnetventils 58 (vom Ausgang 86 zum Eingang 84), das Rückschlagventil 82 und eine interne Leckage des ersten Magnetventils 56 (vom Ausgang 72 zum Eingang 68). Diese Leckage ist über eine entsprechende Auslegung der Magnetventile 56, 58 derart gering, dass auch bei hoher Öltemperatur (geringe Viskosität) der Druck im Kolbenraum für ca. 10 Minuten soweit aufrechterhalten werden kann, dass ein Einrücken der Parksperre nicht erfolgt.

Werden beide Magnetventile 56, 58 aus ihrem erregten Zustand in ihren stromlosen Zustand umgeschaltet, so wird der Kolbenraum 48 über das zweite Magnetventil 58, das zweite Rückschlagventil 82 und das erste Magnetventil 56 mit dem Vorratsbehälter 70 verbunden, so dass ein Flüssigkeitsabfluss aus dem Kolbenraum 48 zum Vorratsbehälter 70 erfolgt. Die Drosselstelle 92 begrenzt den Flüssigkeitsstrom durch die Verbindungsleitung 90, so dass dieser nicht ausreicht, um den Druck in dem Kolbenraum 48 aufrechtzuerhalten. Der Kolben 46 wandert nach oben, der Steuerstift 96 gleitet in die Ringnut 100 und das Leckagekompensationsventil 94 schließt, so dass der Flüssigkeitsnachfluss über die Verbindungsleitung 90 unterbrochen wird. Das Ablassventil 104 öffnet. Gleichzeitig rückt die Verriegelungseinrichtung 11 die Parksperre ein.

Somit erfolgt eine Umschaltung der Parksperrenfunktion (Druckbeaufschlagung oder Druckentlastung des Kolbenraums) nur dann, wenn beide Magnetventile 56, 58 gleichsinnig umgeschaltet werden, wenn also die Steuereinheiten 140, 142 entsprechende Umschaltsignale an die Magnetventile 56 und 58 abgeben.

Falls keine Störung vorliegt, gibt die Hauptsteuereinheit 140 ein Stromsignal zur Erregung des ersten Magnetventils 56 ab und die Nebensteuereinheit 142 gibt ein Stromsignal zur Erregung des zweiten Magnetventils 58 ab. Wenn der Fahrhebel 150 in seine Parkstellung gebracht wird und die durch die Drehzahlsensoren 154, 168 erfasste Drehzahl des Ausgangszahnrades 10 unter einem vorgebbaren Wert liegt, wird durch die Hauptsteuereinheit 140 der Stromfluss zum ersten Magnetventil 56 unterbrochen. Wenn die durch den Drehzahlsensor 168 erfasste Drehzahl des Ausgangszahnrades 10 unter einem vorgebbaren Wert liegt, wird durch die Nebensteuereinheit 140 auch der Stromfluss zum zweiten Magnetventil 58 unterbrochen.

Weil die Hauptsteuereinheit 140 und die Nebensteuereinheit 142 von den beiden Drehzahlsensoren 154 und 168 unabhängige Drehzahlsignale des Fahrzeugantriebs erhalten, kann zuverlässig (Redundanz) verhindert werden, dass eine defekte Steuereinheit 140, 142 oder ein defekter Drehzahlsensor 154, 168 zu einem unbeabsichtigten Parksperreneinlegen oberhalb einer vorgegebenen Fahrgeschwindigkeit führt.

Durch die direkte Spannungsversorgung der Nebensteuereinheit 142 von der Batterie wird gewährleistet, dass ein Abstellen der Zündung während der Fahrt nicht zum Einlegen der Parksperre führt, weil dann das zweite Magnetventil 58 kein Signal zum Umschalten erhält. Die Leitung 164 vom Zündschlüssel zur Nebensteuereinheit 142 dient lediglich als Wecksignal für die Nebensteuereinheit 142. Die beiden Steuereinheiten 140, 142 sind über einen Kommunikations-BUS 174 verbunden, der eine gegenseitigen Überwachung ermöglicht.

Der Drucksensor 106 liefert an die Nebensteuereinheit 142 jederzeit eine Rückmeldung über die tatsächliche Parksperrenposition. Oberhalb einer oberen Druckschwelle (z.B. 15 bar) gilt die Parksperre als ausgerückt (entriegelt), unterhalb eines unteren Schwellwertes (z.B. 1 bar) gilt die Parksperre als eingelegt. Die untere Druckschwelle liegt sinnvollerweise unterhalb eines Druckes, der sich aus der Federkraft der Druckfeder 50 und der Kolbenfläche des Kolbens 46 ergibt, so dass dieser Wert also erst unterschritten wird, wenn der Kolben 46 am Anschlag der eingerückten Stellung steht, auch wenn das mechanische Gestänge der Verriegelungseinrichtung 11 in der Zahn-auf-Zahn-Stellung blockiert ist und (noch) nicht einrastet.

Wenn die Notbetätigung, z. B. bei Verlust der Parksperrenfunktion, für das Abschleppen benutzt wird und hierbei der Dieselmotor in Betrieb sein soll (um beispielsweise den Versorgungsdruck für die Servolenkung und -bremsen bereitzustellen), erhält die als Getriebesteuereinheit ausgebildete Hauptsteuereinheit 140 über den Lageschalter 128 und das Drehpotentiometer 130 am Kupplungspedal die Anforderung, das Getriebe auf "Neutral" einzustellen. Hiermit wird zuverlässig und ohne zusätzliche Sensoren verhindert, dass das Fahrzeug mit permanent manuell ausgerückter Parksperre betrieben wird. Der Lageschalter 128 und das Drehpotentiometer 130 können somit sowohl für die Getriebesteuerung als auch für die Steuerung der Notfunktion genutzt werden.

Auch wenn die Erfindung lediglich anhand eines Ausführungsbeispiels beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise die erfindungsgemäße Steuereinrichtung auch bei Feststellbremsen, bei denen im Gegensatz zu Parksperren zum Festsetzen des Fahrzeugs kein Formschluss sondern ein Reibschluss hergestellt wird, Anwendung finden. Anstelle des beschriebenen hydraulischen Stellantriebs und der elektro-hydraulischen Ansteuermittel können beispielsweise auch rein elektrisch arbeitende Bauteile, welche die in den Patentansprüchen angegebenen Steuerfunktionen ausführen, zur Beeinflussung der Verriegelungsvorrichtung 11 verwendet werden.

## Patentansprüche

1. Steuereinrichtung für die Parksperre eines Kraftfahrzeugs, mit wenigstens einem durch Ansteuermittel betätigbaren Stellantrieb (46), durch den sich wenigstens eine Verriegelungseinrichtung (11) der Parksperre aus einer eingerückten Position, in die sie durch eine Haltekraft gedrängt wird, in eine ausgerückte Position bringen lässt, **dadurch gekennzeichnet, dass** wenigstens zwei unabhängige auf den Stellantrieb (46) einwirkende Ansteuermittel (56, 58) vorgesehen sind, die derart mit dem Stellantrieb (46) zusammenwirken, dass eine Bewegung der Verriegelungseinrichtung (11) aus der eingerückten Position in die ausgerückte Position oder umgekehrt aus der ausgerückten Position in die eingerückte Position nur dann erfolgt, wenn die beiden Ansteuermittel (56, 58) mit gleichsinnigen Umschaltsignalen angesteuert werden.

2. Steuereinrichtung nach Anspruch 1, **dadurch gekennzeichnet, dass** der Stellantrieb ein hydraulischer Betätigungskolben (46) ist, der bei Druckbeaufschlagung die Parksperre in ihre ausgerückte Position bringt.

3. Steuereinrichtung nach Anspruch 1 oder 2, **dadurch gekennzeichnet, dass** die Ansteuermittel elektrisch ansteuerbare Hydraulikventile (56, 58), insbesondere 3/2-Wege-Magnetventile, enthalten.

4. Steuereinrichtung nach Anspruch 3, **dadurch gekennzeichnet, dass** ein erstes Hydraulikventil (56) einen ersten mit einer Druckquelle (64) in Verbindung stehenden Eingang (60), einen zweiten mit einem Vorratsbehälter (70) in Verbindung stehenden Eingang (68) und einen Ausgang (72) aufweist, der im stromlosen Zustand mit dem zweiten Eingang (68) und bei anliegender Spannung mit dem ersten Eingang (60) in Verbindung steht, dass der Ausgang (72) des ersten Hydraulikventils (56) über eine erste Verbindungsleitung (74) mit einem ersten Eingang (78) eines zweiten Hydraulikventils (58) und über eine zweite Verbindungsleitung (80) mit einem zweiten Eingang (84) des zweiten Hydraulikventils (58) in Verbindung steht, dass ein Ausgang (86) des zweiten Hydraulikventils (58) im stromlosen Zustand mit der zweiten Verbindungsleitung (80) und bei anliegender Spannung mit der ersten Verbindungsleitung (74) in Verbindung steht, und dass der Ausgang (86) des zweiten Hydraulikventils (58) mit dem Stellantrieb (46) in Verbindung steht.

5. Steuereinrichtung nach Anspruch 4, **dadurch gekennzeichnet, dass** in der ersten Verbindungsleitung (74) ein Rückschlagventil (76) angeordnet ist, welches einen Rückstrom vom zweiten Hydraulikventil (58) zum ersten Hydraulikventil (56) verhindert, und/oder dass in der zweiten Verbindungsleitung (80) ein Rückschlagventil (82) angeordnet ist, welches einen Zustrom vom ersten Hydraulikventil (56) zum zweiten Hydraulikventil (58) verhindert.

6. Steuereinrichtung nach einem der Ansprüche 3 bis 5, **dadurch gekennzeichnet, dass** sich in einer die Hydraulikventile (56, 58) mit Systemdruck versorgenden Druckversorgungsleitung (66) ein Eingangsrückschlagventil (62) befindet, das bei Systemdruckverlust absperrt.

7. Steuereinrichtung nach einem der Ansprüche 2 bis 6, **dadurch gekennzeichnet, dass** der Kolbenraum (48) des Betätigungskolbens (46) über eine weitere Ventilanordnung (88, 92, 94) mit einer Druckquelle (64) in Verbindung steht, wobei die weitere Ventilanordnung insbesondere eine Drosselstelle (92) enthält.

8. Steuereinrichtung nach Anspruch 7, **dadurch gekennzeichnet, dass** in einer den Kolbenraum (48) mit der Druckquelle (64) verbindenden Verbindungsleitung (90) ein steuerbares Leckagekompensationsventil (94) angeordnet ist, durch das sich der Hydraulikstrom von der Druckquelle (64) zum Kolbenraum (48) steuern lässt, und welches insbesondere ein durch eine Rückstellfeder in Schließstellung gedrängtes Rückschlagventil ist.

9. Steuereinrichtung nach Anspruch 8, **dadurch gekennzeichnet, dass** das Leckagekompensationsventil (94) über ein mechanisches Verbindungsglied (96) mit einem als Stellantrieb ausgebildeten hydraulischen Betätgigungskolben (46) derart verbunden ist, dass es geöffnet wird, wenn der Betätigungskolben (46) seine ausgerückte Stellung einnimmt.

10. Steuereinrichtung nach einem der Ansprüche 4 bis 9, **dadurch gekennzeichnet, dass** in einer den Kolbenraum (48) mit dem ersten Eingang (60) des ersten Hydraulikventils (56) verbindenden Verbindungsleitung (90) ein Druckhalterückschlagventil (88) angeordnet ist, das einen Rückstrom von dem Kolbenraum (48) zum ersten Hydraulikventil (56) verhindert.

11. Steuereinrichtung nach einem der Ansprüche 2 bis 10, **dadurch gekennzeichnet, dass** der Kolbenraum (46) des Betätigungskolbens (46) über ein Ablassventil (104), das drucklos durch Federkraft geöffnet ist, mit einem Vorratsbehälter (70) in Verbindung steht.

12. Steuereinrichtung nach einem der Ansprüche 1 bis 11, **dadurch gekennzeichnet, dass** die Verriegelungseinrichtung (11) eine im Getriebegehäuse gelagerte, mit einem drehfest mit der Fahrzeugachse verbundenen Zahnrad (10) in Eingriff bringbare Sperrklinke (12) aufweist, die über mechanische Verbindungselemente (24, 38, 44) mit dem Stellantrieb (46) in Verbindung steht.

13. Steuereinrichtung nach einem der Ansprüche 1 bis 12, **dadurch gekennzeichnet, dass** eine mechanische Notbetätigungseinrichtung (108) vorgesehen ist, durch die die Verriegelungseinrichtung (11) aus ihrer eingerückten Position in ihre ausgerückte Position bewegbar ist, und dass Sperrmittel vorgesehen sind, die die Verriegelungseinrichtung (11) in ihrer ausgerückten Stellung halten.

14. Steuereinrichtung nach einem der Ansprüche 1 bis 13, **dadurch gekennzeichnet, dass** die Verriegelungseinrichtung (11) für eine Notbetätigung mit einem Kupplungspedal (114) lösbar derart koppelbar ist, dass durch Betätigung des Kupplungspedals (114) die Verriegelungseinrichtung (11) ihre ausgerückte Position einnimmt.

15. Steuereinrichtung nach einem der Ansprüche 1 bis 14, **dadurch gekennzeichnet, dass** eine Lose oder Freilauffunktion (110) vorgesehen ist, die so beschaffen ist, dass die normalen Bewegungen der Parksperrenmechanik zu keiner Bewegung der Notbetätigungseinrichtung führen.

16. Steuereinrichtung nach einem der Ansprüche 1 bis 15, **dadurch gekennzeichnet, dass** wenigstens eine elektrische Steuereinheit (140, 142) vorgesehen ist, die elektrische Steuersignale zum Einrücken oder Ausrücken der Parksperre insbesondere an die Hydraulikventile (56, 58) abgibt, wobei die Steuereinheit (140) vorzugsweise mit wenigstens einem Geber in Verbindung steht, der die Stellung eines Bedienungshebels (150) erfasst.

17. Steuereinrichtung nach Anspruch 16, **dadurch gekennzeichnet, dass** die Steuereinheit (140, 142) Signale wenigstens eines weiteren Messgebers, beispielsweise eines Drehzahlsensors (154, 168), erfasst und verarbeitet und/oder dass die Steuereinheit (142) mit einem Geber, beispielsweise einem Drucksensor (106), in Verbindung steht, der direkt oder indirekt die Lage der Verriegelungseinrichtung (11) erfasst.

18. Steuereinrichtung nach Anspruch 16 oder 17, **dadurch gekennzeichnet, dass** eine Hauptsteuereinheit (140) und eine Nebensteuereinheit (142) vorgesehen sind, die unabhängig voneinander mit Spannung versorgt werden und miteinander kommunizieren, und dass die Hauptsteuereinheit (140) ein erstes Hydraulikventil (56) direkt und ein zweites Hydraulikventil (58) über die Nebensteuereinheit (142) ansteuert, wobei insbesondere die Hauptsteuereinheit (140) und die Nebensteuereinheit (142) jeweils das Signal eines unabhängigen Drehzahlsensors (154, 168) vom Fahrzeugantrieb empfangen.

19. Steuereinrichtung nach einem der Ansprüche 16 bis 18, **dadurch gekennzeichnet, dass** wenigstens ein Sensor (130) und/oder wenigstens ein Schaltelement (128) zur Erfassung der Stellung einer Notbetätigungseinrichtung, beispielsweise eines Kupplungspedals (114), vorgesehen ist, dessen Signale von der Steuereinheit (140) erfasst und ausgewertet werden.

## Claims

1. A control device for the parking lock of a motor vehicle, with at least one actuator (46) operable by control means and through which at least one locking device (11) of the parking lock can be brought out of an engaged position, into which it is biased by a retaining force, into a disengaged position, **characterized in that** at least two control means (56, 58) acting independently on the actuator (46) are provided and so cooperate with the actuator (46) that movement of the locking device (11) out of the engaged position into the disengaged position or conversely out of the disengaged position into the engaged position only takes place when both control means (56, 58) are triggered by switch-over signals of the same sense.

2. A control device according to claim 1, **characterized in that** the actuator is a hydraulic actuating piston (46) which brings the parking lock into its disengaged position when it is pressurised.

3. A control device according to claim 1 or 2, **characterized in that** the control means are electrically controlled hydraulic valves (56, 58), especially 3/2-way magnetic valves.

4. A control device according to claim 3, **characterized in that** a first hydraulic valve (56) has a first input (60) in communication with a pressure source (64), a second input (68) in communication with a reservoir (70) and an output (72) which is in communication with the second input (68) in the current free state and with the first input (60) on application of a voltage, **in that** the output (72) of the first hydraulic valve (56) is in communication through a first connecting line (74) with a first input (78) of a second hydraulic valve (58) and through a second connecting line (80) with a second input (84) of the second hydraulic valve (58), **in that** an output (86) of the second hydraulic valve (58) is communication with the second connecting line (80) in the current free state and with the first connecting line (74) on application of a voltage, and **in that** the output (86) of the second hydraulic valve (58) is in communication with the actuator (46).

5. A control device according to claim 4, **characterized in that** a check valve (76) is disposed in the first connecting line (74) an prevents back flow from the second hydraulic valve (58) to the first hydraulic valve (56), and/or that a check valve (82) is disposed in the second connecting line (80) and prevents flow from the first hydraulic valve (56) to the second hydraulic valve (58).

6. A control device according to any of claims 3 to 5, **characterized in that** an input check valve (62) is present in a pressure supply line (66) providing the hydraulic valves (56, 58) with system pressure and shuts off with loss of system pressure.

7. A control device according to any of claims 2 to 6, **characterized in that** the piston chamber (48) of the actuating piston (46) is communication through a further valve arrangement (88, 92, 94) with a pressure source (64), wherein the further valve arrangement in particular includes a flow restriction (92).

8. A control device according to claim 7, **characterized in that** a controllable leakage compensation valve (94) is disposed in a connecting line (90) connecting the piston chamber (48) to the pressure source (64), through which the hydraulic flow from the pressure source (64) to the piston chamber (48) can be controlled and which in particular is a check valve biased into the closed position by a restoring spring.

9. A control device according to claim 8, **characterized in that** the leakage compensation valve (94) is so coupled through a mechanical connecting member (96) to a hydraulic actuating piston (46) formed as an actuator that it is opened when the actuating piston (46) assumes its disengaged position.

10. A control device according to any of claims 4 to 9, **characterized in that** a pressure maintaining check valve (88) is arranged in a connecting line (90) connecting the piston chamber (48) to the first input (60) of the first hydraulic valve (56) and prevents back flow from the piston chamber (48) to the first hydraulic valve (56).

11. A control device according to any of claims 2 to 10, **characterized in that** the piston chamber (48) of the actuating piston (46) is in communication with a reservoir (70) through a drain valve (104) which is opened by spring force when not subject to pressure.

12. A control device according to any of claims 1 to 11, **characterized in that** the locking device (11) comprises a detent pawl (12) mounted in the transmission housing, which can be brought into engagement with a gearwheel (10) rotationally fast with the vehicle axle and which is coupled to the actuator (46) by mechanical coupling elements (24, 38, 44).

13. A control device according to any of claims 1 to 12, **characterized in that** a mechanical emergency actuation device (108) is provided, through which the locking device (11) can be moved out of its engaged position into its disengaged position and **in that** biasing means are provided which hold the locking device (11) in its disengaged position.

14. A control device according to any of claims 1 to 13, **characterized in that** the locking device (11) can be releasably coupled to a clutch pedal (114) for emergency actuation, in such a way that the locking device (11) assumes its disengaged position on actuation of the clutch pedal (114).

15. A control device according to any of claims 1 to 14, **characterized in that** a slack or lost motion function (110) is provided and is so designed that the normal movements of the parking lock mechanism do not lead to any movement of the emergency actuating device.

16. A control device according to any of claims 1 to 15, **characterized in that** at least one electrical control unit (140, 142) is provided and issues electrical control signals for engaging or disengaging the parking lock, in particular to the hydraulic valves (56, 58), wherein the control unit (140) is preferably coupled to at least one transducer which detects the position of an operator lever (150).

17. A control device according to claim 16, **characterized in that** the control unit (140, 142) detects and processes signals of at least one further measuring transducer, for example a speed of rotation sensor (154, 168) and/or that the control unit (142) is coupled to a transducer, for example a pressure sensor (106) which directly or indirectly detects the position of the locking device (11).

18. A control device according to claim 16 or 17, **characterized in that** a main control unit (140) and a subsidiary control unit (142) are provided and are supplied with voltage independently of one another and communicate with one another, and **in that** the main control unit (140) controls a first hydraulic valve (56) directly and a second hydraulic valve (58) via the subsidiary control unit (142), wherein in particular the main control unit (140) and the subsidiary control unit (142) each receive the signal of an independent speed of rotation sensor (154, 168) from the vehicle drive.

19. A control device according to any of claims 16 to 18, **characterized in that** at least one sensor (130) and/or at least one switch element (128) for detecting the position of an emergency actuating device, for example a clutch pedal (114), is provided, the signals of which are detected and evaluated by the control unit (140).

## Revendications

1. Dispositif de commande pour le frein de stationnement d'un véhicule comportant au moins un mécanisme de commande (46), qui est apte à être actionné par des moyens de commande et par lequel au moins un dispositif de verrouillage (11) du frein de stationnement peut être amené hors d'une position engagée, dans laquelle il est poussé par une force de retenue, vers une position désengagée, **caractérisé en ce qu'**il est prévu au moins deux moyens de commande (56, 58) indépendants, qui agissent sur le mécanisme de commande (46) et qui coopèrent avec le mécanisme de commande (46) de telle sorte qu'un mouvement du dispositif de verrouillage (11), hors de la position engagée dans la position désengagée ou inversement hors de la position désengagée dans la position engagée, ne peut se produire que si les deux moyens de commande (56, 58) sont activés par des signaux de changement de position de même sens.

2. Dispositif de commande selon la revendication 1, **caractérisé en ce que** le mécanisme de commande est un piston de commande (46) hydraulique qui, sous l'effet d'une sollicitation de pression, amène le frein de stationnement dans sa position désengagée.

3. Dispositif de commande selon la revendication 1 ou 2, **caractérisé en ce que** les moyens de commande comportent des vannes hydrauliques (56, 58) pouvant être actionnées par voie électrique, en particulier des électrovannes à 3/2 voies.

4. Dispositif de commande selon la revendication 3, **caractérisé en ce qu'**une première vanne hydraulique (56) comporte une première entrée (60), qui communique avec une source de pression (64), une deuxième entrée (68), qui communique avec un réservoir (70), et une sortie (72) qui, à l'état non sollicité par un courant, communique avec la deuxième entrée (68) et, en cas d'application d'une tension, communique avec la première entrée (60), **en ce que** la sortie (72) de la première vanne hydraulique (56) communique avec une première entrée (78) d'une deuxième vanne hydraulique (58) par l'intermédiaire d'une première conduite de liaison (74), et communique avec une deuxième entrée (84) de la deuxième vanne hydraulique (58) par l'intermédiaire d'une deuxième conduite de liaison (80), **en ce qu'**une sortie (86) de la deuxième vanne hydraulique (58), à l'état non sollicité par un courant, communique avec la deuxième conduite de liaison (80) et, en cas d'application d'une tension, communique avec la première conduite de liaison (74), et **en ce que** la sortie (86) de la deuxième vanne hydraulique (58) communique avec le mécanisme de commande (46).

5. Dispositif de commande selon la revendication 4, **caractérisé en ce qu'**un clapet anti-retour (76) est agencé dans la première conduite de liaison (74), lequel empêche un reflux depuis la deuxième vanne hydraulique (58) vers la première vanne hydraulique (56), et/ou **en ce qu'**un clapet anti-retour (82) est agencé dans la deuxième conduite de liaison (80), lequel empêche un reflux depuis la première vanne hydraulique (56) vers la deuxième vanne hydraulique (58).

6. Dispositif de commande selon l'une quelconque des revendications 3 à 5, **caractérisé en ce que** dans une conduite d'admission de pression (66), alimentant en pression les vannes hydrauliques (56, 58), est agencé un clapet anti-retour d'entrée (62) qui ferme le système en cas de perte de pression.

7. Dispositif de commande selon l'une quelconque des revendications 2 à 6, **caractérisé en ce que** la chambre (48) du piston de commande (46) communique avec une source de pression (64) par l'intermédiaire d'un système de vannes (88, 92, 94) supplémentaire, ledit système de vannes supplémentaire comportant en particulier une zone d'étranglement (92).

8. Dispositif de commande selon la revendication 7, **caractérisé en ce que** dans une conduite de liaison (90), faisant communiquer la chambre du piston (48) avec la source de pression (64), est agencée une vanne de compensation de fuite (94) réglable, par laquelle le flux hydraulique peut être guidé depuis la source de pression (64) vers la chambre du piston (48) et laquelle est en particulier un clapet anti-retour poussé dans la position de fermeture par un ressort de rappel.

9. Dispositif de commande selon la revendication 8, **caractérisé en ce que** la vanne de compensation de fuite (94) est reliée par l'intermédiaire d'un organe de liaison (96) mécanique avec un piston de commande (46) hydraulique, conçu sous forme de mécanisme de commande, de telle sorte qu'elle s'ouvre lorsque le piston de commande (46) est amené dans sa position désengagée.

10. Dispositif de commande selon l'une quelconque des revendications 4 à 9, **caractérisé en ce que** dans une conduite de liaison (90), par laquelle la chambre du piston (48) communique avec la première entrée (60) de la première vanne hydraulique (56), est agencé un clapet anti-retour de pressurisation (88) qui empêche un reflux depuis la chambre du piston (48) vers la première vanne hydraulique (56).

11. Dispositif de commande selon l'une quelconque des revendications 2 à 10, **caractérisé en ce que** la chambre (46) du piston de commande (46) communique avec un réservoir (70) par l'intermédiaire d'une vanne de vidange (104), qui s'ouvre hors pression sous l'effet de la force d'un ressort.

12. Dispositif de commande selon l'une quelconque des revendications 1 à 11, **caractérisé en ce que** le dispositif de verrouillage (11) comporte un cliquet d'arrêt (12), lequel est monté dans le carter des engrenages et peut être amené en prise avec une roue dentée (10) reliée solidaire en rotation avec l'essieu du véhicule, et lequel est relié au mécanisme de commande (46) par l'intermédiaire d'éléments de liaison (24, 38,44) mécaniques.

13. Dispositif de commande selon l'une quelconque des revendications 1 à 12, **caractérisé en ce qu'**il est prévu un dispositif de manoeuvre d'urgence (108), par lequel le dispositif de verrouillage (11) peut être amené hors de sa position engagée dans sa position désengagée, et **en ce qu'**il est prévu des moyens d'arrêt qui maintiennent le dispositif de verrouillage (11) dans sa position désengagée.

14. Dispositif de commande selon l'une quelconque des revendications 1 à 13, **caractérisé en ce que**, en vue d'une manoeuvre d'urgence, le dispositif de verrouillage (11) peut être couplé de manière amovible à une pédale d'embrayage (114), de telle sorte que sous l'effet de l'actionnement de la pédale d'embrayage (114), le dispositif de verrouillage (11) est amené dans sa position désengagée.

15. Dispositif de commande selon l'une quelconque des revendications 1 à 14, **caractérisé en ce qu'**il est prévu un organe fonctionnel mobile ou à course libre (110) qui est conçu de telle sorte que les mouvements normaux du mécanisme du frein de stationnement n'entraînent aucun mouvement du dispositif de manoeuvre d'urgence.

16. Dispositif de commande selon l'une quelconque des revendications 1 à 15, **caractérisé en ce qu'**il est prévu au moins une unité de commande (140, 142) électrique, qui délivre, en particulier aux vannes hydrauliques (56, 58), des signaux électriques commandant l'engagement ou le désengagement du frein de stationnement, l'unité de commande (140) étant reliée de préférence à au moins un capteur qui détecte la position d'un levier de commande (150).

17. Dispositif de commande selon la revendication 16, **caractérisé en ce que** l'unité de commande (140, 142) capte et traite des signaux délivrés par au moins un capteur de mesure supplémentaire, tel qu'un capteur de vitesse de rotation (154, 168), et/ou **en ce que** l'unité de commande (142) est reliée à un capteur, tel qu'un capteur de pression (106), qui détecte directement ou indirectement la position du dispositif de verrouillage (11).

18. Dispositif de commande selon la revendication 16 ou 17, **caractérisé en ce qu'**il est prévu une unité de commande principale (140) et une unité de commande auxiliaire (142), qui sont alimentées en tension indépendamment l'une de l'autre et qui communiquent entre elles, et **en ce que** l'unité de commande principale (140) active directement une première vanne hydraulique (56) et, par l'intermédiaire de l'unité de commande auxiliaire (142), une deuxième vanne hydraulique (58), en particulier l'unité de commande principale (140) et l'unité de commande auxiliaire (142) recevant chacune le signal d'un capteur de vitesse de rotation (154, 168) indépendant du système d'entraînement du véhicule.

19. Dispositif de commande selon l'une quelconque des revendications 16 à 18, **caractérisé en ce qu'**il est prévu au moins un capteur (130) et/ou au moins un élément de commutation (128) pour détecter la position d'un dispositif de manoeuvre d'urgence, tel qu'une pédale d'embrayage (114), dont les signaux sont reçus et analysés par l'unité de commande (140).
